Europäisches Patentamt

European Patent Office

Office européen des brevets

(11) Veröffentlichungsnummer: **0 245 706**
**B1**

(12) EUROPÄISCHE PATENTSCHRIFT

(45) Veröffentlichungstag der Patentschrift: 23.01.91

(51) Int. Cl.⁵: **H 01 M 10/39**

(21) Anmeldenummer: 87106232.9

(22) Anmeldetag: 29.04.87

(54) Elektrochemische Speicherzelle.

(30) Priorität: 06.05.86 DE 3615238

(43) Veröffentlichungstag der Anmeldung:
19.11.87 Patentblatt 87/47

(45) Bekanntmachung des Hinweises auf die
Patenterteilung:
23.01.91 Patentblatt 91/04

(84) Benannte Vertragsstaaten:
BE DE FR GB IT NL

(56) Entgegenhaltungen:
EP-A-0 161 079
FR-A-2 142 695
FR-A-2 339 966
US-A-4 146 683
US-A-4 188 463
US-A-4 269 909

(73) Patentinhaber: Asea Brown Boveri
Aktiengesellschaft
Kallstadter Strasse 1
D-6800 Mannheim-Käfertal (DE)

(72) Erfinder: Knödler, Reinhard, Dr. Dipl.-Phys.
Lattweg 17
D-6902 Sandhausen (DE)
Erfinder: Bansemir, Werner
Eichenweg 16
D-6905 Schriesheim (DE)
Erfinder: Mennicke, Stefan, Dr. Dipl.-Chem.
Türkisweg
D-6906 Leimen 2 (DE)
Erfinder: Steinleitner, Günther, Dr. Dipl.-Chem.
Hans-Pfitzner-Strasse 1
D-6905 Schriesheim (DE)

(74) Vertreter: Rupprecht, Klaus, Dipl.-Ing. et al
c/o BBC Brown Boveri Aktiengesellschaft ZPT
Postfach 100351 Kallstadter Strasse 1
D-6800 Mannheim 1 (DE)

Courier Press, Leamington Spa, England.

## Beschreibung

Die Erfindung bezieht sich auf eine elektrochemische Speicherzelle gemäß dem Oberbegriff des Patentanspruches 1.

Solche elektrochemischen Speicherzellen eignen sich sehr gut als Energiequellen. Sie finden in vermehrten Maße ihre Anwendung beim Aufbau von Speicherbatterien, die zur Stromversorgung von Elektrofahrzeugen vorgesehen sind.

Ein spezielles Beispiels für diese Speicherzellen sind solche auf der Basis von Natrium und Schwefel, die wiederaufladbar sind und einen Festelektrolyten aus Betaaluminiumoxid besitzen, der den Anodenraum vom Kathodenraum trennt. Als Vorteil dieser Speicherzellen ist hervorzuheben, daß bei ihrem Laden keine elektrochemischen Nebenreaktionen ablaufen, und die Stromausbeute daher etwa bei 100% liegt. Bei solchen Speicherzellen ist der Anodenraum mit Natrium gefüllt und innerhalb des becherförmigen Festelektrolyten angeordnet. Der Kathodenraum liegt zwischen dem Festelektrolyten und dem metallischen Gehäuse, welches die Speicherzellen nach außenhin begrenzt. Innerhalb des Kathodenraums ist bei bis jetzt bekannten Speicherzellen ein langfasriges Material aus Graphit oder Kohlenstoff angeordnet, das zur Bildung der Elektrode mit Schwefel getränkt ist. Bei der Herstellung der Speicherzellen werden aus dem faserförmigen Material halbschalenförmige Elemente geformt, mit Schwefel getränkt und dann in den Kathodenraum eingesetzt. Die Fertigung der Speicherzellen erfolgt bei Raumtemperatur. Für den Betrieb müssen die Speicherzellen auf eine Temperatur von 350°C aufgeheizt werden. Wird eine Speicherzelle einem solchen Temperatureinfluß ausgesetzt, so kommt es zu einer Ausdehnung des Fasermaterials, insbesondere der beiden Halbschalen, die im Kathodenraum angeordnet sind. Sie dehnen sich soweit aus, daß ihre Stirnflächen bündig aneinander stoßen und die Fasern der einen Hälfte in die Fasern der anderen Hälfte übergreifen, so daß kein Zwischenraum mehr im Grenzbereich der Halbschalen verbleibt. Beim Entladen der Speicherzellen wandern die im Anodenraum enthaltenen Natriumionen durch den Festelektrolyten hindurch in den Kathodenraum und bilden dort mit dem vorhandenen Schwefel das Natriumpolysulfid. Aufgrund dessen, daß die beiden aus dem langfasrigen Material gebildeten Halbschalen sich nunmehr eng berühren, kann sich das Natriumpoylsulfid gleichmäßig, insbesondere auch über die Grenzflächen der beiden Halbschalen hinweg im Kathodenraum verteilen. Wird eine solche Speicherzelle, die größere Mengen Natriumpolysulfid im Kathodenraum enthält auf eine Temperatur unter 280°C abgekühlt, so erstarrt dieses zu einem geschlossenen Ring, der den Festelektrolyten fest umgibt. Das Natriumpolysulfid weist einen höheren thermischen Ausdehnungskoeffizienten als das Betaaluminiumoxid auf, aus dem der Festelektrolyt gefertigt ist. Dies bedeutet, daß der aus dem Natriumpolysulfid gebildete Ring beim Erkalten auf den Festelektrolyten aufschrumpft. Dadurch haftet er sehr fest auf den Außenflächen des Festelektrolyten und übt bei abnehmender Temperatur Kräfte auf selbigen aus, die zu einem Bruch desselben führen können.

Aus der US—A—4269909 ist eine elektrochemische Speicherzelle bekannt, die becherförmig ausgebildet ist. Zwischen der Schwefelelektrode und dem Festelektrolyten ist ein Spalt vorgesehen, der mit Graphit ausgefüllt ist. Dieser Füllstoff soll den direkten Kontakt der Schwefelelektrode mit dem Festelektrolyten vermeiden. Damit sollen Kräfte, die von dem Schwefel ausgehen könnten, von dem Festelektrolyten ferngehalten werden.

In der EP—A—0161079 ist eine elektrochemische Speicherzelle beschrieben, die ebenfalls becherförmig ausgebildet ist. Eine Sicht aus einem Metallsulfid ist zwischen dem Festelektrolyten und der Schwefelelektrode vorgesehen. Der metallische Anteil dieser Schicht kann durch Aluminium, Kupfer, Eisen, Zinn, Zink, Blei, Magnesium oder Chrom gebildet werden. Diese Schicht hat die Aufgabe den Wirkungsgrad des Schwefels zu vergrößern.

Der Erfindung liegt, ausgehend von diesem Stand der Technik, die Aufgabe zugrunde, eine elektrochemische Speicherzelle so auszubilden, daß ein Aufschrumpfen des sich bei Temperaturen unter 280°C bildenden Natriumpolysulfidringes auf den Festelektrolyten ausgeschlossen wird.

Diese Aufgabe wird erfindungsgemäß durch die kennzeichnenden Merkmale des Patentanspruches 1 gelöst.

Eine weitere Lösung ist in Patentanspruch 2 offenbart.

Durch die Ausbildung der Schwefelelektrode in Form von zwei Halbschalen und die Anordnung einer Zwischenschicht wird ein direkter mechanischer Kontakt zwischen dem Festelektrolyten und der Schwefelelektrode vermieden.

Da das Elektrodenmaterial der geteilten Schwefelelektrode im Grenzbereich der beiden Halbschalen keine geschlossene Fläche bildet, wird hierdurch auch die Bildung eines geschlossenen Natriumpolysulfidrings unterbunden. Die Zwischenschicht wird aus einem solchen Werkstoff hergestellt, der entweder einen Schmelzpunkt unter 300°C besitzt oder bei der Betriebstemperatur der Speicherzelle keine festen schlechtleitenden Bereiche aufweist. Die Zwischenschicht weist eine optimale Leitfähigkeit für Natriumionen auf, so daß hierdurch die elektrischen Eigenschaften der Speicherzelle nicht beeinträchtigt werden. Die gleitfähige Zwischenschicht wird zudem aus einem solchen Material gefertigt, das keine korrosionsfördernden Anionen, wie z.B. Chloridionen, erzeugt, die sich in Form von Lochfraß nachteilig auf die Lebensdauer der Speicherzelle auswirken. Die im Kathodenraum vorgesehene Zwischenschicht weist einen sehr kleinen Elastizitätsmodul auf. Das Material der Zwischenschicht wird so gewählt, daß der Elastizitätsmodul, nachfolgend nur noch E-Modul genannt, kleiner als der E-Modul der Keramik und kleiner als der E-Modul des erstarrten Natriumpolysulfids ist, der etwa $5 \times 10^3$ MPa beträgt. Der E-Modul des Festelektrolyten hat einen Wert von $3 \times 10^5$ MPa. werden.

Weitere erfindungswesentliche Merkmale sind in den Unteransprüchen gekennzeichnet.

Die Erfindung wird nachfolgend anhand einer Zeichnung erläutert.

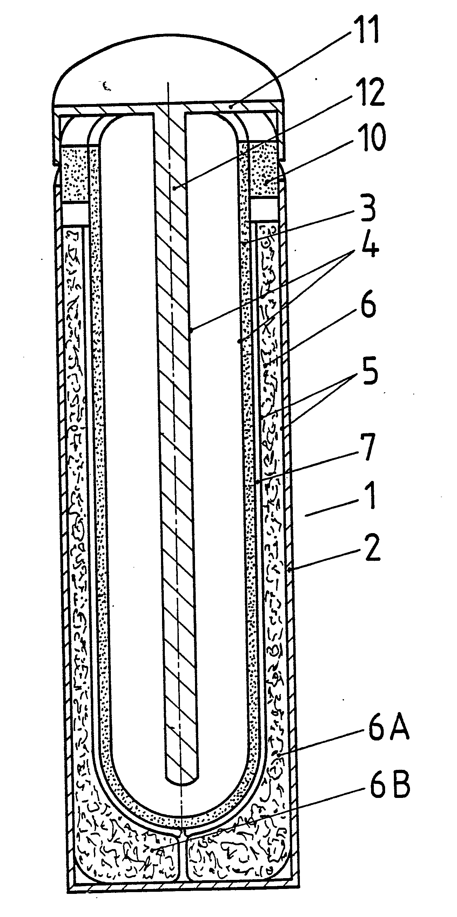

In der Zeichnung ist eine elektrochemische Speicherzelle 1 im Vertikalschnitt dargestellt. Die Speicherzelle 1 wird nach außenhin durch ein metallisches Gehäuse 2 begrenzt, das bei dem hier dargestellten Ausführungsbeispiel becherförmig ausgebildet ist. Die Innenflächen des metallischen Gehäuses sind mit einem Korrosionsschutz (hier nicht dargestellt) überzogen. Im Inneren des metallischen Gehäuses 2 ist der ebenfalls becherförmig ausgebildete Festelektrolyt 3 angeordnet. Er ist aus Betaaluminiumoxid gefertigt, das eine Bruchfestigkeit von größer/gleich 100 MPA aufweist. Bei dem hier dargestellten Ausführungsbeispiel dient der Innenraum des Festelektrolyten 3 als Anodenraum 4, der mit Natrium gefüllt ist. Die Abmessungen des Festelektrolyten 3 sind so gewählt, daß zwischen seinen Außenflächen und den Innenflächen des metallischen Gehäuses 2 ein zusammenhängender Zwischenraum verbleibt, der als Kathodenraum 5 dient. Der Kathodenraum 5 enthält die Elektrode 6, die aus einem filz- bzw. einem faserförmigen Material auf der Basis von Graphit oder Kohlenstoff gefertigt ist. Das faserförmige Material wird zu zwei Halbschalen 6A und 6B gepreßt, anschließend mit Schwefel getränkt und daraufhin in den Kathodenraum gesetzt. Um einen mechanischen Kontakt zwischen den Halbschalen 6A und 6B und dem Festelektrolyten 3 zu vermeiden, ist zwischen den Halbschalen 6A und 6B und dem Festelektrolyten 3 eine Zwischenschicht 7 angeordnet. Diese wird entweder durch wasserfreies Natriumhydroxid, bzw. Molybdänsulfid, Titansulfid bzw. Graphit gebildet. Alle Materialien müssen wasserfrei sein. Die Zwischenschicht 7 ist entweder mit der Oberfläche des Festelektrolyten 3 oder mit den Oberflächen der Halbschalen 6A, 6B, die dem Festelektrolyten zugewandt sind, fest verbunden. Diese Zwischenschicht verhindert eine feste Verbindung zwischen den Halbschalen 6A, 6B und dem Festelektrolyten, und zwar insbesondere dann, wenn die Speicherzelle 1 auf eine Temperatur unter 280°C abgekühlt wird. Durch die Zwischenschicht 7 wird ein Gleiten der Halbschalen 6A und 6B entlang der Oberfläche des Festelektrolyten sichergestellt. Dies ist insbesondere dann von Vorteil, wenn die Speicherzelle 1 unter eine Temperatur von 280°C angekühlt wird, und sich innerhalb des Kathodenraums 5 ein starrer Ring aus Natriumpolysulfid bildet, durch welchen die Halbschalen 6A und 6B gegen die Oberfläche des Festelektrolyten 3 gedrückt werden. Durch die gleitende Wirkung ist eine Übertragung der von dem erstarrenden Natriumpolysulfid ausgehenden Druckkräfte auf den Festelektrolyten 3 ausgeschlossen. Die Zwischenschicht 7 wird vorzugsweise in einer Dicke von 50-100 µm auf die Oberfläche des Festelektrolyten 3 oder auf die Oberflächen der Halbschalen 6A und 6B aufgetragen. Um die leitfähigkeit dieser Zwischenschicht 7 zu verbessern, kann dem die Zwischenschicht bildenden Werkstoff eine definierte Menge an Betaaluminiumoxid beigemischt werden. Das für die Ausbildung der Zwischenschicht 7 geeignete Natriumhydroxid, Molybdänsulfid, Titansulfid bzw. der Graphit weist die Eigenschaft auf, daß entweder sein Schmelzpunkt unter 320° liegt und der Werkstoff während des Betriebs der Speicherzelle, deren Arbeitstemperatur 350°C beträgt, flüssig ist oder daß die Natriumionenleitfähigkeit im festen Zustand groß ist. Zur Ausbildung der Zwischenschicht kann beispielsweise auf die Oberfläche des Festelektrolyten 3 ein Graphitspray aufgesprüht werden. Ferner besteht die Möglichkeit, den Festelektrolyten in eine kolloidale Graphitdispersion zu tauchen. Als Lösungsmittel wird hierbei eine Flüssigkeit verwendet, die vorzugsweise bei etwa 100°C verdampft. Zur Ausbildung der Zwischenschicht 7 auf den Oberflächen der Halbschalen 6A und 6B kann in der Weise verfahren werden, daß Natriumhydroxid - (NaOH)-Blättchen zu Pulver gemahlen und im Trockenschrank getrocknet werden, so daß sie wasserfrei sind. Nachdem die Halbschalen mit dem Schwefel getränkt sind, wird auf den noch flüssigen Schwefel eine Pulvermischung aufgestreut, die aus dem oben erwähnten Natriumhydroxid und einem definierten Anteil an Betaaluminiumoxidpulver besteht. Nach dem Pressen und Erkalten der Halbschalen werden diese in den Kathodenraum 5 eingesetzt. Bei einer Speicherzelle, deren Festelektrolyt einen Außendurchmesser von 2,5 cm aufweist, und der 22 cm lang ist, müssen zur Ausbildung einer optimalen Zwischenschicht 7 etwa 2 Gramm Natriumhydroxidpulver, dem etwa 2 Gramm Betaaluminiumoxidpulver beigemischt sind, aufgetragen werden. Zur Ausbildung einer Zwischenschicht 7, die aus Molybdänsulfid oder Titansulfid besteht, wird in gleicher Weise verfahren. Auf die Beimischung von Betaaluminiumoxidpulver kann in diesem Fall verzichtet werden. Für eine Speicherzelle 1 mit einem Festelektrolyten 3, der die oben genannten Abmessungen aufweist, genügt zur Ausbildung einer wirksamen Zwischenschicht 7 ebenfalls die Menge von 2 Gramm Molybdänsulfid.

Nachdem der Kathodenraum 5 der Speicherzelle in der oben beschriebenen Weise ausgebildet, der Anodenraum 4 mit dem erforderlichen Natrium gefüllt und der Festelektrolyt 3 in das metallische Gehäuse 2 eingesetzt ist, wird die Speicherzelle 1 nach außenhin luftdicht verschlossen. Zu diesem Zweck wird der am oberen offenen Ende des Festelektrolyten 3 angeordnete Ring 10 aus Alphaaluminiumoxid mit der Innenfläche des metallischen Gehäuses 2 dauerhaft verbunden. Der Ring 10 ist so bemessen, daß er den zwischen dem Festelektrolyten 3 und dem metallischen Gehäuse 2 angeordnete Kathodenraum 5 vollständig verschließt. Für den Verschluß der Speicherzelle 1 nach außenhin wird eine Kappe 11 verwendet, die den äußeren Rand des Rings 10 teilweise umgibt und dauerhaft mit diesem verbunden ist. Die Kappe 10 ist aus einem elektrisch leitenden Material gefertigt, das gegenüber Natrium beständig ist. An der Innenseite der Kappe 11 ist ein Stab 12 befestigt. Dieser ist ebenfalls aus einem elektrisch leitenden Material gefertigt und elektrisch leitend mit der Innenfläche der Kappe 11 verbunden. Der Stab 12 ist so bemessen, daß er weit in den Festelektrolyten 3 hineinragt und als anodischer Stromkollektor dient. Als kathodischer Stromkollektor dient das metallische Gehäuse 2, an das der Kathodenraum 5 direkt angrenzt.

Die erfindungsgemäße Speicherzelle 1 ist nicht nur auf Ausführungsformen beschränkt, bei denen die Zwischenschicht 7 aus wasserfreiem Natriumhydroxid, Molybdänsulfid, Titansulfid oder Graphit gefertigt ist. Vielmehr umfaßt die Erfindung alle Zwischenschichten, welche die eingangs beschriebenen Eigenschaften aufweisen und eine gleitende Wirkung der Halbschalen 6A und 6B auf der Oberfläche des Festelektrolyten 3 hervorrufen.

**Patentansprüche**

1. Elektrochemische Speicherzelle auf der Basis von Natrium und Schwefel mit einem Anodenraum (4) und einem Kathodenraum (5), die durch einen Festelektrolyten (3) voneinander getrennt und wenigstens bereichsweise von einem metallischen Gehäuse (2) begrenzt sind, wobei der Kathodenraum zur Bildung der Elektrode (6) mit faserförmigem Material aus Graphit oder Kohlenstoff, das mit Schwefel getränkt ist, ausgefüllt und zwischen dem Festelektrolyten (3) und der Elektrode (6) eine Zwischenschicht (7) angeordnet ist, dadurch gekennzeichnet, daß die Elektrode (6) durch zwei aus faserförmigem Material gepreßte, mit Schwefel getränkte Halbschalen (6A, 6B) gebildet ist, welche den Festelektrolyten (3) hüllenartig umgeben, und daß die Zwischenschicht (7) auf die dem Festelektrolyten (3) zugewandten Oberflächen der Halbschalen (6A, 6B) mit ein Dicke zwischen 10 µm und 100 µm, vorzugsweise einer Dicke von 50 µm aufgetragen und aus einem wasserfreien Natriumhydroxid, einem entsprechenden Molybdänsulfid, oder aus Titansulfid gefertigt ist.

2. Elektrochemische Speicherzelle auf der Basis von Natrium und Schwefel mit einem Anodenraum (4) und einem Kathodenraum (5), die durch einen Festelektrolyten (3) voneinander getrennt und wenigstens bereichsweise von einem metallischen Gehäuse (2) begrenzt sind, wobei der Kathodenraum (5) zur Bildung der Elektrode (6) mit faserförmigem Material aus Graphit oder Kohlenstoff, das mit Schwefel getränkt ist, ausgefüllt und zwischen dem Festelektrolyten (3) und der Elektrode (6) eine Zwischenschicht (7) angeordnet ist, dadurch gekennzeichnet, daß die Elektrode (6) durch zwei aus faserförmigem Material gepreßte, mit Schwefel getränkte Halbschalen (6A, 6B) gebildet ist, welche den Festelektrolyten (3) hüllenartig umgeben, und daß die Zwischenschicht (7) mit einer Dicke zwischen 10 µm und 100 µm, vorzugsweise einer Dicke von 50 µm auf die dem Kathodenraum (5) zugewandte Oberfläche des Festelektrolyten (3) aufgetragen und aus einem wasserfreien Natriumhydroxid, einem entsprechenden Molybdänsulfid oder einem Titansulfid gefertigt ist.

3. Elektrochemische Speicherzelle nach Anspruch 1, dadurch gekennzeichnet, daß zur Bildung der Zwischenschicht (7) pulverförmiges wasserfreies Natriumhydroxid, Molybdänsulfid oder Titansulfid auf die dem Festelektrolyten (3) zugewandten Oberflächen der Halbschalen (6A, 6B) aufgetragen ist.

4. Elektrochemische Speicherzelle nach einem der Ansprüche 1 oder 3, dadurch gekennzeichnet, daß dem pulverförmigen, wasserfreien Natriumhydroxid pulverförmiges Betaaluminiumoxid beigemischt ist, und daß die beiden Pulver in einem Verhältnis von 1/1 zur Bildung der Zwischenschicht (7) auf die dem Festelektrolyten (3) zugewandten Oberflächen der Halbschalen (6A, 6B) aufgetragen sind.

**Revendications**

1. Cellule d'accumulateur électrochimique à base de sodium et de soufre, comportant un espace anodique (4) et un espace cathodique (5) qui sont séparés l'un de l'autre par un électrolyte solide (3) et qui, au moins dans certaines zones, sont délimités par une enveloppe métallique (2), l'espace cathodique (5) étant rempli, pour former l'électrode (6), d'un matériau fibreux, à base de graphite ou de carbone, qui est imprégné de soufre, et une couche intermédiaire (7) étant disposée entre l'électrolyte solide (3) et l'électrode (6), caractérisée en ce que l'électrode (6) est formée de deux demi-coquilles (6A, 6B) moulées, en matériau fibreux, imprégnées de soufre, qui entourent l'électrolyte solide (3) à la manière d'une enveloppe, et que la couche intermédiaire (7) est appliquée sur les surfaces, tournées vers l'électrolyte solide (3), des demi-coquilles (6A, 6B), sur une épaisseur de 10 à 100 µm, de préférence de 50 µm, et est composée d'un hydroxyde de sodium anhydre, d'un sulfure de molybdène correspondant ou de sulfure de titane.

2. Cellule d'accumulateur électrochimique à base de sodium et de soufre, comportant un espace anodique (4) et un espace cathodique (5) qui sont séparés l'un de l'autre par un électrolyte solide (3) et qui, au moins dans certaines zones, sont délimités par une enveloppe métallique (2), l'espace cathodique (5) étant rempli, pour former l'électrode (6), d'un matériau fibreux, à base de graphite ou de carbone, qui est imprégné de soufre, et une couche intermédiaire (7) étant disposée entre l'électrolyte solide (3) et l'électrode (6), caractérisée en ce que l'électrode (6) est formée de deux demi-coquilles (6A, 6B) moulées, en matériau fibreux, imprégnées de soufre, qui entourent l'électrolyte solide (3) à la manière d'une enveloppe, et que la couche intermédiaire (7), présentant une épaisseur de 10 à 100 µm, de préférence de 50 µm, est appliquée sur la surface, tournée vers l'espace cathodique (5), de l'électrolyte solide (3) et est composée d'un hydroxyde de sodium anhydre, d'un sulfure de molybdène correspondant ou de sulfure de titane.

3. Cellule d'accumulateur électrochimique selon la revendication 1, caractérisée en ce qu'on applique, pour former la couche intermédiaire (7), de l'hydroxyde de sodium anhydre, du sulfure de molybdène ou du sulfure de titane, à l'état pulvérulent, sur les surfaces, tournées vers l'électrolyte solide (3), des demi-coquilles (6A, 6B).

4. Cellule d'accumulateur électrochimique selon l'une quelconque des revendications 1 à 3, caractérisée en ce que de l'oxyde d'aluminium bêta est mélangé à l'hydroxyde de sodium anhydre pulvérulent et que les deux poudres, dont les proportions correspondent à un rapport 1/1, sont appliquées sur les surfaces, tournées vers l'électrolyte solide (3) des demi-coquilles (6A, 6B) pour former la couche intermédiaire (7).

**Claims**

1. Electrochemical storage cell based on sodium and sulphur, having an anode space (4) and a cathode space (5) which are separated from one another by a solid electrolyte (3) and are at least zonally bounded by a metallic housing (2), the cathode space being filled, for forming the electrode (6), by fibrous graphite or carbon material which is impregnated with sulphur, and an interlayer (7) being located between the solid electrolyte (3) and the electrode (6), characterized in that the electrode (6) is formed by two half-shells (6A, 6B) which are pressed from fibrous material and impregnated with sulphur and which surround the solid electrolyte (3) like an envelope, and that the interlayer (7) is applied to the surfaces, facing the solid electrolyte (3), of the half-shells (6A, 6B) in a thickness of between 10 µm and 100 µm, preferably a thickness of 50 µm, and is made of an anhydrous sodium hydroxide, an appropriate molybdenum sulphide or of titanium sulphide.

2. Electrochemical storage cell based on sodium and sulphur, having an anode space (4) and a cathode space (5) which are separated from one another by a solid electrolyte (3) and are at least zonally bounded by a metallic housing (2), the cathode space (5) being filled, for forming the electrode (6), by fibrous graphite or carbon-material which is impregnated with sulphur, and an interlayer (7) being located between the solid electrolyte (3) and the electrode (6), characterized in that the electrode (6) is formed by two half-shells (6A, 6B) which are pressed from fibrous material and impregnated with sulphur and which surround the solid electrolyte like an envelope, and that the interlayer (7) is applied to the surface, facing the cathode space (5), of the solid electrolyte (3) in a thickness of between 10 µm and 100 µm, preferably a thickness of 50 µm, and is made of an anhydrous sodium hydroxide, an appropriate molybdenum sulphide or a titanium sulphide.

3. Electrochemical storage cell according to Claim 1, characterized in that, to form the interlayer (7), pulverulent anhydrous sodium hydroxide, molybdenum sulphide or titanium sulphide is applied to the surfaces, facing the solid electrolyte (3), of the half-shells (6A, 6B).

4. Electrochemical storage cell according to one of Claims 1 or 3, characterized in that pulverulent beta-alumina is admixed to the pulverulent anhydrous sodium hydroxide and that the two powders are applied in a 1/1 ratio to the surfaces, facing the solid electrolyte (3), of the half-shells (6A, 6B) to form the interlayer (7).

EP 0 245 706 B1

1